# EUROPÄISCHE PATENTSCHRIFT

(11) **EP 1 377 362 B1**
(45) Veröffentlichungstag und Bekanntmachung des Hinweises auf die Patenterteilung: **10.06.2009**
(21) Anmeldenummer: 02714199.3
(22) Anmeldetag: 02.04.2002
(51) Int. Cl.: B01F 3/04, B01F 3/18, C02F 7/00, C02F 3/14, A01K 63/04

(54) **SCHWIMMENDER SCHAUFELRADBELÜFTER**
FLOATING PADDLEWHEEL AERATOR
VENTILATEUR A ROUE A AUBES FLOTTANT

(30) Priorität: 30.03.2001 DE 20105706 U
(43) Veröffentlichungstag der Anmeldung: 07.01.2004
(73) Patentinhaber: Kronawitter, Andreas, 94522 Wallersdorf (DE)
(72) Erfinder: Kronawitter, Andreas, 94522 Wallersdorf (DE)
(74) Vertreter: Appelt, Christian W.
(86) Internationale Anmeldenummer: PCT/EP2002/003637
(87) Internationale Veröffentlichungsnummer: WO 2002/078825

(56) Entgegenhaltungen:
- WO-A-89/01915
- DE-U- 20 007 642
- US-A- 4 190 619
- US-A- 4 191 479
- US-A- 4 409 107
- US-A- 5 595 691

## Beschreibung

Die Erfindung bezieht sich auf einen schwimmenden Schaufelradbelüfter zur Gewässer- und Klärbeckenbelüftung, mit einem langgestreckte Schwimmer enthaltenden Rahmen, wenigstens einem vom Rahmen getragenen Drehantrieb mit einer Abtriebswelle und an dieser Welle sitzenden, im Betrieb in das Wasser schlagenden Schaufeln, von denen im Betriebszustand des Belüfters die Schwimmer an der Gewässer- oder Klärbeckenoberfläche schwimmen, die Welle über dem Gewässer- oder Klärbeckenspiegel rotiert und Teile der mitrotierenden Schaufeln bis unter diesen Spiegel geraten.

Die Schaufelradbelüfter dienen dem Aufrühren der Wasseroberfläche beispielsweise in Meeresfisch-, Krebs- und Muschelfarmen oder sonstigen Wasserkulturen, aber auch in Klärbecken, mit Hilfe der in das Wasser schlagenden Schaufeln. Der Belüfter schwimmt nach einem Wegeplan hin und her über die Oberfläche des zu belüftenden Gewässers, oder wird stationär an einem Ort verankert.

Bekannte Modelle solcher Schaufelradbelüfter weisen zwei, drei *oder mehr* parallel erstreckte Schwimmer auf, die durch einen Rahmen überbrückt sind. Schwimmer können hierbei rohrförmige Schwimmkörper, aber z. B. auch Stangen mit an den Enden oder in Abständen an den Stangen sitzenden Schwimmkörpern sein. Der Rahmen trägt über dem zentralen Schwimmer einen zumeist elektrischen Antriebsmotor mit einem Getriebe, das bei den bekannten Schaufelradbelüftern ein Schneckengetriebe ist und die Drehzahl erheblich heruntersetzt, und von diesem Getriebe laufen beiderseits Wellen in Richtung auf die randseitigen Schwimmer aus, die die Schaufelräder in Form von sternförmig in Radialebenen liegenden parallelen Kränzen tragen. Um gewisse gegenseitige Eigenbewegungen der Schwimmer zu ermöglichen, sind die beiderseitigen Wellen, die jeweils am randseitigen Schwimmer mit Hilfe eines hydrostatischen Lagers gelagert sind, an Abtriebswellen des Getriebekastens über Kardangelenke oder Hardyscheiben angeschlossen. *Bei einem anderen bekannten Schaufelradbelüfter (*WO 89/01915*) ist ein einziges Belüftungs-Schaufelrad zwischen vier Schwimmer, von denen jeweils zwei in einer Linie und die beiden Linien parallel zueinander angeordnet sind, auf einer waagrechten Welle montiert. Ein ähnlicher Aufbau mit zwei parallelen Schwimmern und einer dazwischen befindlichen starren Plattform, die die Installationen trägt, ist auch für ein Schlammbelüfungsgerät bekannt, das auch noch ein Paddelrad für seine Fortbewegung auf der Wasseroberfläche aufweist (*US-A 4191479*).*

Die bekannten Schaufelradbelüfter *sind aufgrund der Schwimmeranordnung bei Seegang erheblich auf Verwindung beansprucht und müssen deshalb sehr kräftig dimensioniert sein, die Lager sind dann Seitenbelastungen ausgesetzt. Außerdem* haben *diese Schaufelradbelüfter im allgemeinen* einen relativ komplexen Aufbau und erweisen sich aufgrund der Kurzlebigkeit einzelner ihrer Bauelemente selbst als relativ kurzlebig. Insbesondere das Getriebe im Getriebekasten und die Wellenaufhängungen einschließlich der hydrostatischen Lager, welche Kunststofflager mit Wasser-Gleitflächen sind, sind von kurzer Betriebslebensdauer. Speziell bei Motor und Getriebe wird die Funktion durch eindringendes und *aufgrund einer vertikalen Anordnung der Getriebeeingangs- und Motorwelle* im Gehäuse verbleibendes Wasser, insbesondere Seewasser, beeinträchtigt. Sowohl über die Lagerung als auch über die Luftlöcher, die ein Atmen der Gehäuseinnenräume ermöglichen sollen, dringen Anteile des herumgeschleuderten Wassers ein und führen zu beschleunigter Korrosion. Das Schneckengetriebe hat bauartbedingt eine relativ kürzere Lebensdauer durch höhere Reibung der bewegten Teile und einen geringeren Wirkungsgrad als andere Getriebe wie z. B. Stirnradgetriebe.

Durch die Erfindung sollen diese Nachteile vermieden und soll insbesondere der Aufbau einfacher und stabiler gemacht werden, wodurch auch die Nutzlebensdauer des Geräts erhöht wird. Dies wird durch die erfindungsgemäßen Maßnahmen erreicht. Der erfindungsgemäße schwimmende Schaufelradbelüf ter ist dadurch gekennzeichnet, daß die Schwimmer den Rahmen bilden, zueinander in im wesentlichen rechtem Winkel angeordnet sind und miteinander starr in einer Konfiguration verbunden sind, in der an einem ersten Schwimmer an seinen beiden sich gegenüberliegende Längsseiten weitere Schwimmer oder Abschnitte von Schwimmern befestigt sind, und daß dieser erste Schwimmer an seiner Oberseite, die im Vergleich zu den Längsseiten, an denen die weiteren Schwimmer(abschnitte) sitzen um 90° nach oben verdreht liegt, ganz oder teilweise den Drehantrieb trägt, dessen Abtriebswelle beiderseits und parallel zur Längserstreckung der weiteren Schwimmer(abschnitte) vorsteht und die die Schaufeln tragende Welle ist. Vorzugsweise ist hierbei der Drehantrieb in einem Gehäuse angeordnet, aus dem die Abtriebswelle beiderseits jeweils als fliegend gelagerter Wellenstutzen vorsteht.

Durch diese Maßnahmen wird ein robuster, einfach aufgebauter schwimmende Schaufelradbelüfter geschaffen, dessen Konstruktion sich insbesondere, jedoch nicht ausschließlich, für kleinere Schaufelradbelüfter mit nur zwei Schaufelrädern eignet. Die Lagerung der Schaufelradwellen ist problemlos, da sie nur in jeweils einem Bereich, nämlich im Drehantriebsaggregat, gelagert und an ihren Enden frei fliegend sind, so daß ein gewisser Seegang und hieraus resultierende Rahmenverwindungen, die bei der definierten Rahmenkonstruktion ohnehin kaum vorkommen, nicht zu verstärktem Lagerdruck und zu erhöhter Abnützung führen. Die Konfiguration der Schwimmer ist im einfachsten Fall eine T Konfiguration, eine Alternative hierzu stellt eine H-Konfiguration oder auch eine Kreuzkonfiguration dar.

Um den Transport von der Herstellungsstätte zur Einsatzstelle zu erleichtern, sind vorzugsweise die Schwimmer in zusammenmontierbarer Weise miteinander verbunden, so dass sie am Transport noch Einzelstücke sind. In spezieller Ausgestaltung sind sie hierbei sogar baugleich, so dass zwischen den Längsschwimmern und den Querschwimmem kein Unterschied besteht und die Produktion und Lagerhaltung vereinfacht ist. Für die Verbindung der Schwimmer miteinander sind verschiedene dem Fachmann an sich bekannte Möglichkeiten gegeben, z. B. Schweißverbindungen, Gewindeverbindungen, Schwalbenschwanzverbindungen, Verbindungen mit T-Stück-Flansch und Schellen oder mit einer Gegenhalbschale.

Der Drehantrieb, gewöhnlich bestehend aus einem Elektromotor mit Getriebe, es kann jedoch auch ein Schrittmotor, ein Langsamläufermotor oder eine Brennkraftmaschine mit Getriebe sein, ist gemäß der Erfindung *vorzugsweise* in einem Gehäuse angeordnet, das auf dem Schwimmer in fest montierter Weise reitet und aus dem die beiderseits vorstehende Welle jeweils als fliegend gelagerter Wellenstutzen vorsteht, also ein Wellenstutzen, dessen freies Ende nicht gelagert ist. Es ergeben sich also keine aus der Rahmenverwindung bei unruhiger Wasseroberfläche resultierende Probleme. Im Rahmen der Erfindung können die Teile des Drehantriebs auch auf mehrere Schwimmer verteilt sein. Ein speziell günstiges und wartungsarmes Getriebe ist ein Riemengetriebe, bei dem nur in regelmäßigen Zeitabständen der Riemen erneuert werden muss. Weitere Möglichkeiten sind z. B. Zahnrad-, Stirnrad-, Schnecken-, Reibrad- oder Kettengetriebe.

Eine durch die fliegenden Wellenstutzen ermöglichte bevorzugte Befestigung der Schaufeln an diesen Wellenstutzen besteht darin, dass die Schaufeln an einer jeweils an einem der Wellenenden sitzenden Trägerplatte montiert sind, die auf ein am Wellenende sitzendes unrundes, z. B. sechskantiges Kopplungsteil aufgesteckt und dort gegen eine Bewegung in der Längsrichtung der Welle gesichert sind, wobei vorzugsweise das unrunde Kopplungsteil eine Schraubenmutter ist, die auf einen in eine Gewindebohrung im Wellenende eingeschraubten Schraubbolzen aufgeschraubt ist, auf den zum Sichern der Trägerplatte auch noch eine weitere Schraubenmutter aufgeschraubt ist, und die Gewindebohrungen, Schraubbolzen und Schraubenmuttern auf den beiderseitigen Wellenstutzen entgegengesetzte Schrauborientierung haben, die jeweils im Sinne eines Festziehens durch den der Antriebsdrehrichtung entgegengesetzten Drehwiderstand gewählt ist. Diese Maßnahmen ergeben eine an Ort und Stelle montierbare und auch wieder demontierbare, im Betrieb stabile Befestigung der Schaufelträgerplatten, und diese Befestigung erfolgt mit Hilfe einfacher Standardbauteile und ohne Aufwand spezieller Erfahrung oder Geschicklichkeit.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:
- Fig. 1: in perspektivischer Darstellung einen erfindungsgemäßen Schaufelradbelüfter, wobei zur klareren Darstellung der Konstruktion ein vorderes Schaufelrad weggelassen ist;
- Fig. 2: in Draufsicht und Seitenansicht einen Schwimmer des Schaufelradbelüfters von Fig. 1;
- Fig. 3: in Draufsicht einen abgewandelten Schwimmerrahmen
- Fig. 4: in perspektivischer Darstellung eine abgewandelte Ausführung eines Schwimmerrahmens, einschließlich der Darstellung eines Drehantriebs;
- Fig. 5: in schematischer Draufsicht einen Schwimmer mit einem weiterhin abgewandelten Schwimmerrahmen;
- Fig. 6: eine Darstellung zur Veranschaulichung des Aufbaus und der Befestigung der Schaufelräder an ihrer Antriebswelle;
- Fig. 7: eine Schnittansicht durch den Wellenstutzen und das Schaufelrad gemäß Fig. 6 in einer Ebene VII - VII;
- Fign. 8, 9, 10 und 11: abgewandelte Gestaltungen der Schwimmer in perspektivischen Darstellungen;
- Fign. 12 und 13: Draufsichten auf zwei weiter abgewandelte Ausführungen der erfindungsgemäßen Schaufelradbelüfter.

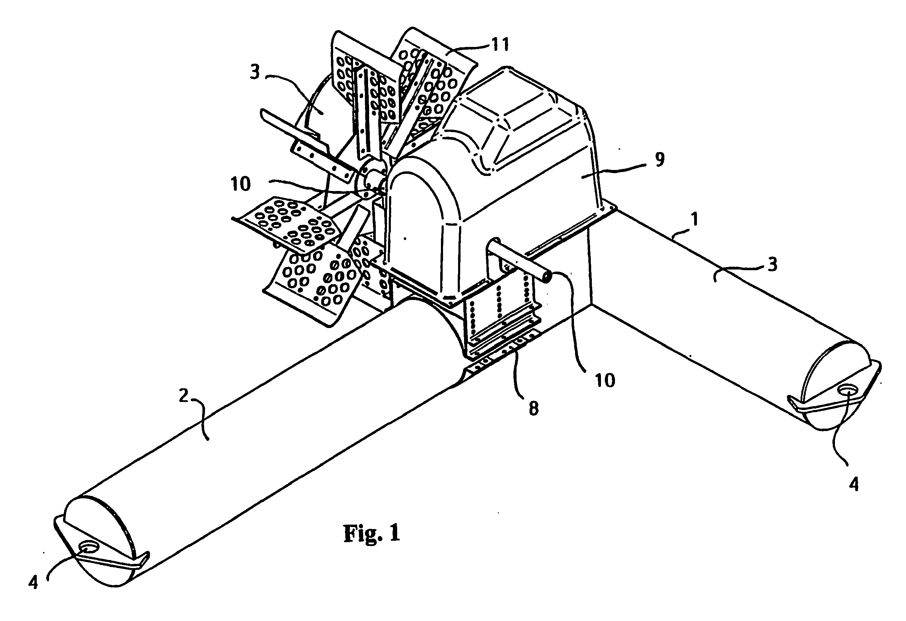

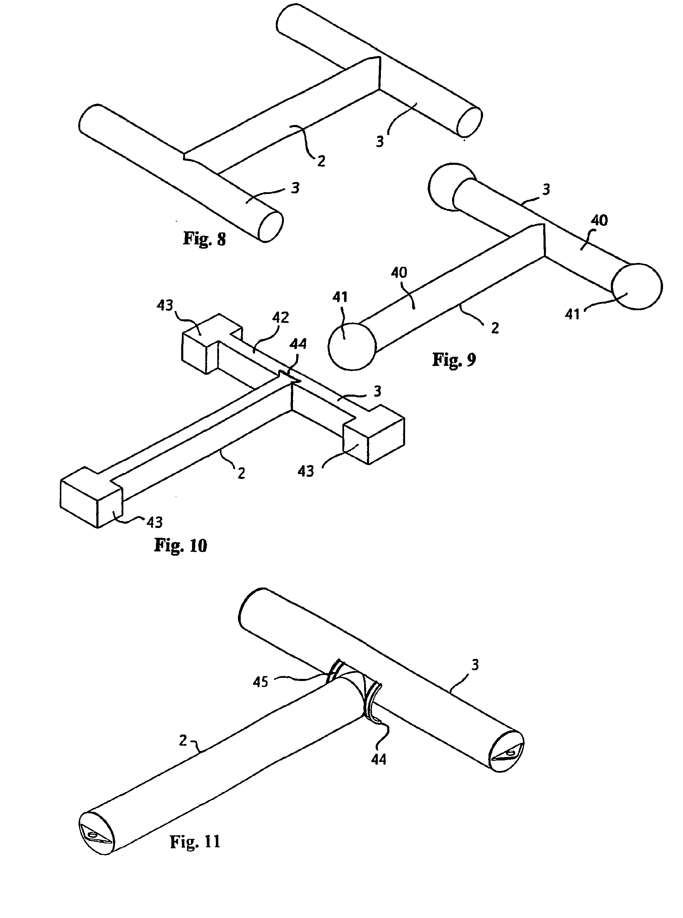

Ein Schaufelradbelüfter nach Fig. 1 weist einen Rahmen 1 auf, der aus zwei in rechtwinkliger T-Konfiguration fest miteinander verbundenen jeweils langgestreckten rohrförmigen Schwimmern 2 und 3 besteht. Die Schwimmer bestehen aus geschlossenen luftgefüllten Rohren, beispielsweise aus Kunststoff, und haben an ihren Enden Ösen 4, mit deren Hilfe sie angeleint und über das Wasser gezogen werden, oder auch zu mehreren für einen Parallelbetrieb zusammengefügt werden können. Ihr Querschnitt kann nach sonstigen Zweckmäßigkeitsgesichtspunkten gewählt sein, in Fig. 1 ist er kreisrund dargestellt, jedoch kann er z. B. auch rechteckig sein (Fig. 10).

Auf dem hinsichtlich der T-Konfiguration längsverlaufenden Schwimmer 2 ist, bei der dargestellten Konstruktion mit Hilfe von Rohrschellen 8, ein Antriebsaggregat 9 montiert, in dem sich - in der Zeichnung nicht sichtbar - ein Elektromotor mit Getriebe befindet und von dem ein in der Zeichnung nicht sichtbares Kabel zu einer am Ufer befindlichen Stromquelle verläuft. Aus dem Gehäuse des Antriebsaggregats 9 steht beiderseits je ein Wellenstutzen 10 vor, dessen Achse parallel zur Längsachse des querverlaufenden langgestreckten Schwimmers 3 liegt und somit die entsprechende Achse des längsverlaufenden langgestreckten Schwimmers 2 rechtwinklig kreuzt. Die Wellenstutzen 10, die eine durchgehende Welle bilden und mit dem Endzahnrad des Getriebes des Antriebsaggregats 9 verbunden sind, tragen jeweils ein Schaufelrad 11, wobei in Fig. 1 nur das hintere Schaufelrad 11 aufmontiert dargestellt ist. Das Antriebsaggregat 9 und die Schaufelräder 11 werden also gemeinsam von den Rohrschellen 8 getragen und an Ort und Stelle gehalten. Die Wellenstutzen 10 haben eine solche Höhe über dem Wasserspiegel, daß die Schaufeln der Schaufelräder 11 bei ihrem Umlauf im unteren Bereich in das Wasser eintauchen, es rühren und es hierdurch belüften.

Ein eventueller Wellengang des Wassers führt zwar dazu, daß der Rahmen 1 insgesamt hüpfende Bewegungen durchführt, er führt jedoch nicht zu einer verstärkten Verwindung und auch nicht zu einer erhöhten Belastung der Wellenlagerung. Die auf die Wellenstutzen einwirkende Kraft ist im wesentlichen die der Drehung der Schaufelräder 11 entgegenwirkende Widerstandskraft des Wassers, die bei Bewegungen des Rahmens relativ zum umgebenden Wasser zwar mal höher und mal niedriger ist, jedoch im wesentlichen stets gleiche Richtung aufweist.

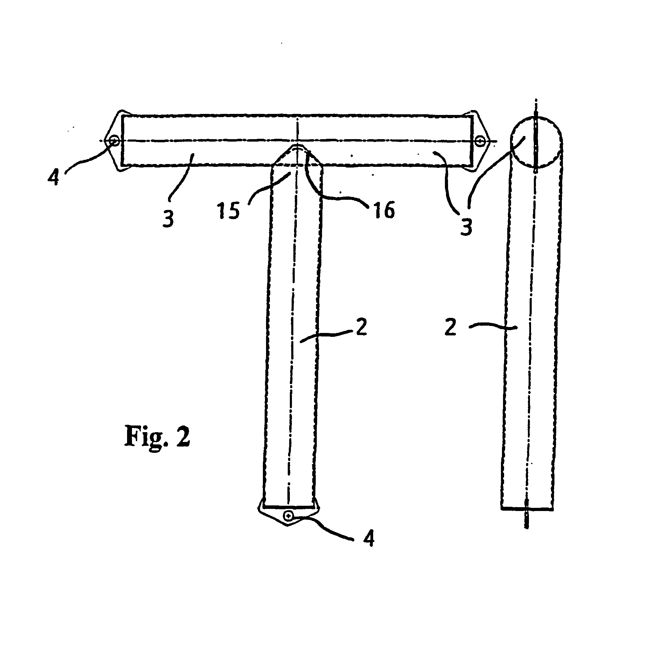

Fig. 2 zeigt die beiden Schwimmer 2 und 3 des Rahmens 1 in einer ersten Ausführung, bei der der Schwimmer 2 nur an einem Ende eine Öse 4 hat, der Schwimmer 3 jedoch an beiden Enden, und das dem Ösenende gegenüberliegende Ende 15 des Schwimmers 2 auf eine mittige Montagenut 16 im Schwimmer 3 trifft, wo in nicht dargestellter Weise die starre Verbindung der beiden Schwimmer hergestellt ist.

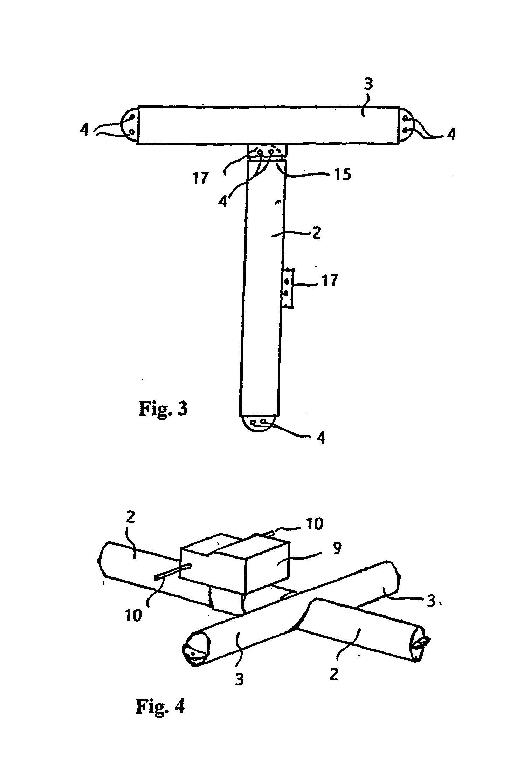

Fig. 3 zeigt demgegenüber eine etwas abgewandelte Konstruktion, bei der die beiden Schwimmer 2 und 3 baugleich sind und jeder von ihnen in seinem zentralen Bereich eine Montagelasche 17 aufweist, die dazu dient, das Ende 15 des Schwimmers 2 an den zentralen Bereich des Schwimmers 3 anzukuppeln; die Montagelasche 17 des Schwimmers 2 übt beim montierten Rahmen gemäß Fig. 3 keine Funktion aus. Gemäß einer nicht dargestellten Abwandlung kann sie jedoch zur Befestigung des Antriebsaggregats 9 mit herangezogen werden, indem entsprechende Kopplungselemente am Antriebsaggregat 9 vorhanden sind, wodurch dieses Antriebsaggregat noch besser gegen eine unbeabsichtigte Verdrehung am Schwimmer 2, wenn dieser einen kreisförmigen Querschnitt hat, gesichert ist. Zum Zusammenbau der Schwimmer 2 und 3 werden einerseits die Ösen 4, andererseits entsprechende koppelelemente der Montagelasche 17 verwendet, um eine in jede Richtung verdrehungsfeste Verbindung der beiden Teile zu schaffen.

Fig. 4 zeigt eine weitere Alternative, die in manchen Situationen vorteilhaft sein mag, nämlich eine Kreuzkonfigctration des Rahmens 1, bei der die Schwimmer 2 und 3 an Punkten im Verlauf ihrer Länge miteinander verbunden sind. Die Bedeutung einer solchen Gestaltung kann dann gegeben sein, wenn mehrere Schaufelradbelüfter in bestimmter Weise kombiniert werden sollen oder noch zusätzliche Funktionselemente wie z. B. Futterstreuer angebracht werden sollen.

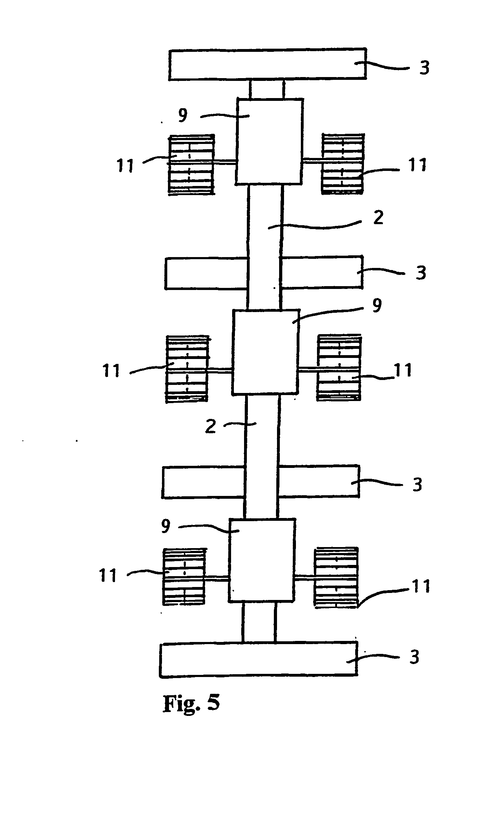

Eine integrierte Kombination mehrerer Schaufelradbelüfter nach Fig. 1 ist in Fig. 5 dargestellt, bei der der Schwimmer 2 sehr langgestreckt ist und insgesamt drei Antriebsaggregate 9 mit Schaufelrädern 11 trägt, während an - beim dargestellten Beispiel - beiden Enden die quer verlaufenden Schwimmer 3 in T-Koppelung anschließen und zwischen den Aggregaten 9 die Schwimmer 3 in der Art von Fig. 4 in Kreuzkonfiguration angeschlossen sind.

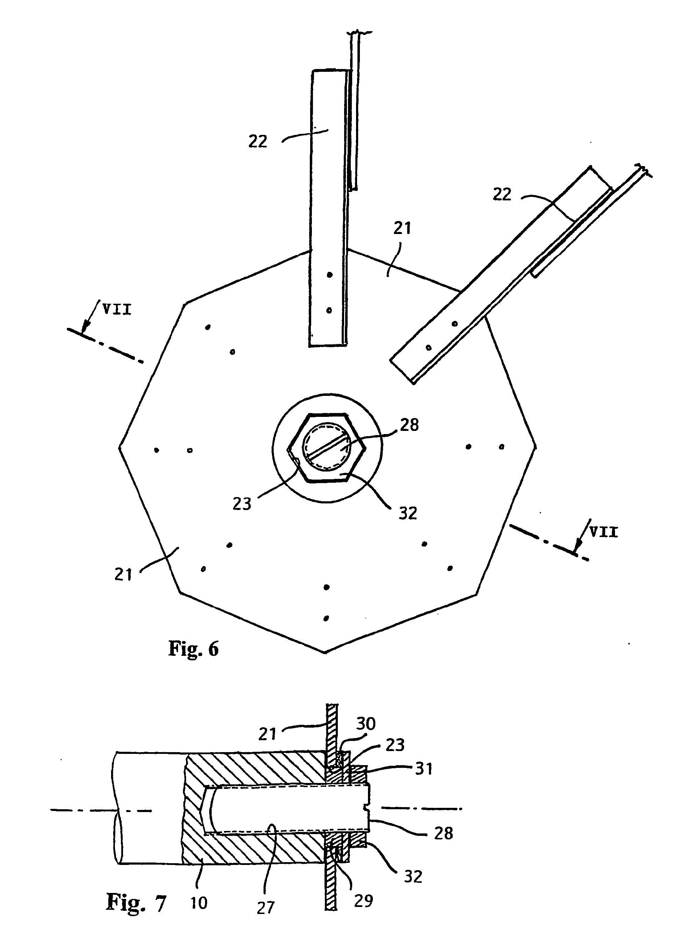

Die Fig.n 6 und 7 veranschaulichen eine zweckmäßige Weise der Befestigung der Schaufelräder an den freien Enden der Wellenstutzen 10. Jedes Schaufelrad 11 besteht aus einer Trägerplatte 21 und - bei den dargestellten Beispielen - acht an der Trägerplatte angeschraubten Schaufel 22, die jeweils einen an der Trägerplatte 21 angeschraubten Stiel und eine an diesem Stiel angeschraubte, durchlöcherte Schaufelplatte gemäß der üblichen Bauart umfassen. In Fig. 6 sind nur einige der Schaufeln 22 dargestellt, die sich aber tatsächlich rund um den Umfang der Trägerplatte 21 verteilen. Im Zentrum weist die Trägerplatte 21 eine sechseckige Ausnehmung 23 auf.

Im Ende des Wellenstutzens 10 ist mittig eine axial verlaufende Gewindebohrung 27 ausgebildet, in die bis nahe zum Anschlag ein Schraubbolzen 28 eingeschraubt ist. Der Schraubbolzen steht über die Endfläche des Wellenstutzens 10 vor und auf ihn ist eine Sechskantmutter 29 aufgeschraubt, auf die die Trägerplatte 21 mit ihrer sechskantigen Ausnehmung 23 aufgesteckt ist. Auf die Trägerplatte 21 drückt vom in Fig. 7 rechts befindlichen freien Ende her, zunächst ein in gewissem Umfang elastischer Ring 30, der außen um die Mutter 29 gelegt ist, und weiterhin ein auf den Schraubbolzen 28 gesteckter, eine Grenzfläche am Ort der Stirnfläche der Schraubenmutter 29 bildender Ring 3I, auf den wiederum eine auf den Bolzen 28 aufgeschraubte Mutter 32 drückt. Die Trägerplatte 21 und der Ring 30 sind also zwischen der Endfläche des Wellenstutzens 10 und einem äußeren Ringbereich der Scheibe 31 eingespannt, wobei die Elastizität des Rings 30 im Toleranzbereich liegende Maßabweichungen der axialen Dicke der Mutter 29 ausgleicht.

Die Schaufelräder 11 haben eine aufgrund der Konstruktion vorgegebene und durch die Ausführung der Schaufeln 22 erforderliche Betriebs-Drehrichtung. Der der Betriebsdrehung entgegengesetzte Widerstand des Wassers könnte je nach Drehrichtung geeignet sein, über die Trägerplatte 21 ein Drehmoment auf die Mutter 29 auszuüben, das bei entsprechender Drehrichtung diese lockert und aufschraubt. Die Schrauborientierungen sind deshalb so gewählt, daß der Gewindebolzen 27 auf einer Seite ein Rechtsgewinde und auf der anderen Seite ein Linksgewinde trägt, wobei die Anordnung so geschaffen ist, daß durch das über die Trägerplatte 21 einwirkende Brems-Drehmoment die Mutter 29 festgezogen wird.

Wie erläutert, gibt es hinsichtlich der Schwimmer und ihrer Verbindung im Rahmen der Erfindung eine Vielzahl von Möglichkeiten. Zur Veranschaulichung der Breite der Möglichkeiten zeigen die Fig.n 8 bis 10 einige weitere Beispiele.

Fig. 8 zeigt - wie Fig. 1 - rohrförmige Schwimmer, jedoch in H-Konfiguration, mit einem einzigen Schwimmer 2 und an seinen beiden Enden angebrachten Schwimmern 3. Der nicht mit dargestellte Drehantrieb sitzt im wesentlichen auf dem Schwimmer 2, Teile können sich jedoch auch auf einem oder beiden der Schwimmer 3 abstützen. Die H-Konfiguration weist gegenüber der T-Konfiguration den Vorteil einer kompakte Anordnung bei erhöhter Auftriebskraft, aber auch den Nachteil einer gewissen Verwindung und damit Torsionsbelastung des Schimmers 2 auf.

Fig. 9 zeigt - wiederum anhand der T-Konfiguration - eine abgewandelte Schwimmerkonstruktion. Der Schwimmer 3 besteht aus einem Stangenteil 40 von minderer oder fehlender Auftriebskraft, und Auftriebskörpern 41 an seinen beiden Enden. Der Schwimmer 2 weist wiederum den Stangenteil 40 auf, der Auftriebskörper 41 sitzt aber nur an einem Ende, während das andere Ende mit dem Stangenteil 40 des Schwimmers 3 verbunden ist.

Fig. 10 zeigt Schwimmer rechteckigen Querschnitts, die beispielsweise durch Blasformung hergestellt sind, in Form von Hohlkörpern 42 mit einem bzw. zwei volumenerweiterten endseitigen zusätzlichen Auftriebskörpern 43. In Fig. 10 ist auch eine abgewandelte Art der Verbindungsstelle zwischen den Schwimmern 2 und 3 dargestellt, nämlich als Beispiel eine Schwalbenschwanzverbindung 44. Wie jedoch schon erläutert, gibt es für diese Verbindung eine Vielzahl konstruktiver Möglichkeiten, von denen je nach Schwimmer die eine oder andere günstiger sein mag. Die in Fig. 10 dargestellte Schwalbenschwanzverbindung 44 eignet sich z. B. bevorzugt für die auch in Fig. 10 dargestellten quaderförmigen Schwimmer.

Eine weitere Art der Verbindungsstelle, die sich besonders für runde Schwimmer eignet, ist in Fig. 11 dargestellt. Am Ende des Schwimmers 2 ist ein zylindersegmentförmiger Flansch 44 angebracht, der zwei flache Rillen 45 aufweist und dessen Zylindersegment-Innenradius dem Außenradius des zylindrischen Schwimmers 3 gleicht. Mit in der Zeichnung nicht dargestellten, in die Rillen 45 einzulegenden schellenartigen Bändern, die um den Schwimer 3 gelegt sind, werden die Schwimmer 2 und 3 starr verbunden.

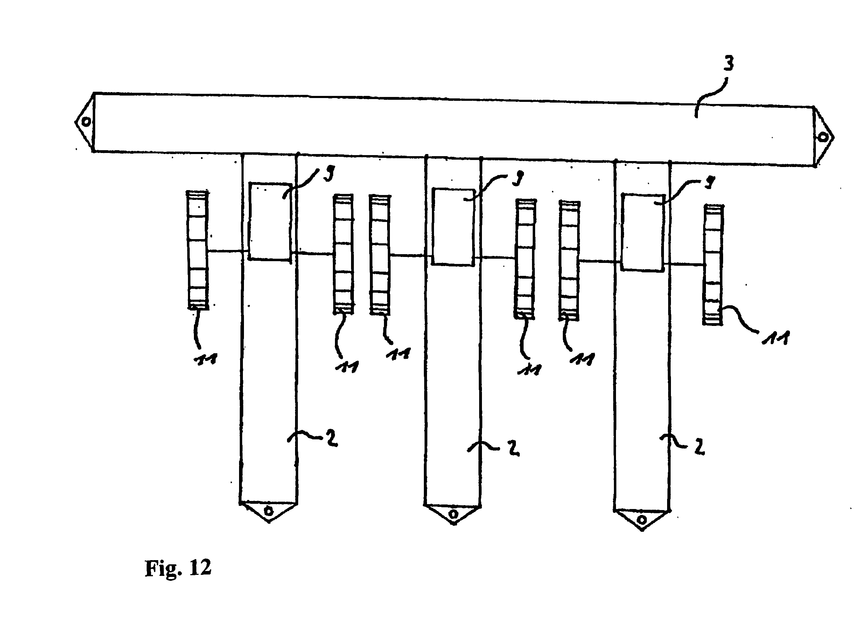

Der in Figur 12 dargestellte Schaufelradbelüfter hat einen langgestrecktem Schwimmer 3, von dem drei in gleichen Abständen angeordnete Längsschwimmer 2 in Querrichtung wegstehen, so daß eine dreifache T-Anordnung gebildet ist. An jedem Längsschwimmer ist ein Antriebsaggregat 9 vorgesehen, das jeweils zwei Schaufelräder 11 antreibt.

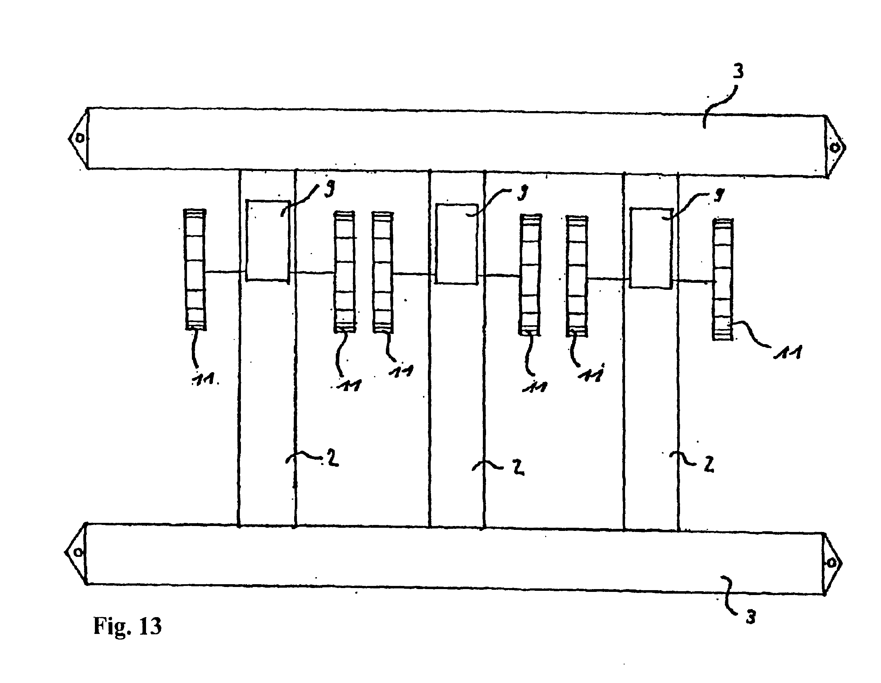

Der Schaufelradbelüfter gemäß Figur 13 unterscheidet sich von demjenigen nach Figur 12 dadurch, daß die dort freien Enden an einen weiteren langgestreckten Schwimmer 2 angeschlossen sind, der identisch wie der erste langgestreckte Schwimmer 2 ausgebildet ist, so daß eine dreifache H-Anordnung gebildet ist.

## Patentansprüche

1. Schwimmender Schaufelradbelüfter zur Gewässer- und Klärbeckenbelüf-tung, mit einem langgestreckte Schwimmer (2, 3) enthaltenden Rahmen (1) und mit wenigstens einem vom Rahmen getragenen Drehantrieb (9) mit einer Abtriebswelle (10) und an dieser Welle sitzenden Schaufeln (22), von denen im Betriebszustand des Belüfters die Schwimmer an der Gewässer- oder Klärbeckenoberfläche schwimmen, die Welle über dem Gewässer- oder Klärbeckenspiegel rotiert und Teile der mitrotierenden Schaufeln bis unter diesen Spiegel geraten, **dadurch gekennzeichnet, daß** die Schwimmer (2, 3) den Rahmen (1) bilden, zueinander in im wesentlichen rechtem Winkel angeordnet sind und miteinander in einer Konfiguration verbunden sind, in der an einem ersten Schwimmer (2) an seinen beiden sich gegenüberliegenden Längsseiten weitere Schwimmer (3) oder Abschnitte von Schwimmern befestigt sind, und daß dieser erste Schwimmer (2) an seiner Oberseite, die im Vergleich zu den Längsseiten, an denen die weiteren Schwimmer(abschnitte) (3) sitzen, um 90° nach oben verdreht liegt, ganz oder teilweise den Drehantrieb (9) trägt, dessen Abtriebswelle (10) beiderseits und parallel zur Längserstreckung der weiteren Schwimmer(abschnitte) (3) vorsteht und die die Schaufeln (32) tragende Welle ist.

2. Schaufelradbelüfter nach Anspruch 1, **dadurch gekennzeichnet, daß** die Konfiguration der Schwimmer (2, 3) eine Konfiguration ist.

3. Schaufelradbelüfter nach Anspruch 1, **dadurch gekennzeichnet, daß** die Konfiguration der Schwimmer (2, 3) eine Kreuzkonfiguration ist.

4. Schaufelradbelüfter nach Anspruch 1, **dadurch gekennzeichnet, daß** die Konfiguration der Schwimmer (2, 3) eine H-Konfiguration ist.

5. Schaufelradbelüfter nach einem der Ansprüche 1 bis 4, **dadurch gekennzeichnet, daß** die Schwimmer (2, 3) in lösbar zusammenmontierter Weise miteinander verbunden sind.

6. Schaufelradbelüfter nach Anspruch 5, **dadurch gekennzeichnet, dass** die Schwimmer (2, 3) untereinander baugleich sind.

7. Schwimmender Schaufelradbelüfter nach einem der Ansprüche 1 bis 6, **dadurch gekennzeichnet, dass** der Drehantrieb (9) in einem Gehäuse angeordnet ist, aus dem die Abtriebswelle (10) beiderseits jeweils als fliegend gelagerter Wellenstutzen (10) vorsteht.

8. Schaufelradbelüfter nach Anspruch 7, **dadurch gekennzeichnet, dass** die Schaufeln (22) an einer jeweils an einem der Wellenenden sitzenden Trägerplatte (21) montiert sind, die auf ein am Wellenende sitzendes unrundes Kopplungsteil (29) aufgesteckt und dort gegen eine Bewegung in der Längsrichtung der Welle (10) gesichert sind.

9. Schaufelradbelüfter nach Anspruch 8, **dadurch gekennzeichnet, dass** das unrunde Kopplungsteil eine Schraubenmutter (29) ist, die auf einen in eine Gewindebohrung (27) im Wellenende eingeschraubten Schraubbolzen (28) aufgeschraubt ist, auf den zum Sichern der Trägerplatte (21) auch noch eine weitere Schraubenmutter (32) aufgeschraubt ist.

10. Schaufelradbelüfter nach Anspruch 9, **dadurch gekennzeichnet, daß** die Gewindebohrungen (27), Schraubbolzen (28) und Schraubenmuttern (29) auf den beiderseitigen Wellenstutzen (10) entgegengesetzte Schrauborientierung haben, die jeweils im Sinne eines Festziehens durch den der Antriebsdrehrichtung entgegengesetzten Drehwiderstand gewählt ist.

## Claims

1. Floating paddlewheel aerator for aerating water and clearing basins, with a frame (1) containing elongated floats (2, 3) and with at least one drive unit (9) supported by the frame with an output shaft (10) and paddles (22) mounted on this shaft, the floats floating on the surface of the water or clearing basin during operation of the aerator, the shaft rotating above the level of the water or clearing basin and parts of the paddles rotating with the shaft being immersed in the liquid, **characterised in that** the floats (2, 3) form the frame (1), are arranged substantially at a right-angle to each other and are connected with each other in a configuration in which at both opposite longitudinal sides of a first float (2), further floats (3) or float sections are mounted and that said first float (2) on its top side, which by comparison with the longitudinal sides at which the further floats (sections) (3) are located, is turned upwards by 90°, partially or completely carries the drive unit (9) whose output shaft (10) projects on both sides and parallel to the longitudinal direction of the further floats (sections) (3) and is the shaft carrying the paddles (22).

2. Paddlewheel aerator according to claim 1, **characterised in that** the configuration of the floats (2, 3) is a T-configuration.

3. Paddlewheel aerator according to claim 1, **characterised in that** the configuration of the floats (2, 3) is a cross configuration.

4. Paddlewheel aerator according to claim 1, **characterised in that** the configuration of the floats (2, 3) is an H configuration.

5. Paddlewheel aerator according to one of claims 1 to 4, **characterised in that** the floats (2, 3) are detachably connected together.

6. Paddlewheel aerator according to claim 5, **characterised in that** the floats (2, 3) are all of identical construction.

7. Paddlewheel aerator according to one of claims 1 to 6, **characterised in that** drive unit (9) is arranged in a housing from which the output shaft (10) projects on both sides as a cantilevered shaft socket (10).

8. Paddlewheel aerator according to claim 7, **characterised in that** the paddles (22) are mounted on support plates (21) each attached to one of the shaft ends, attached to a non-circular connecting part (29) located at the shaft end and secured there against any movement in the longitudinal direction of the shaft (10).

9. Paddlewheel aerator according to claim 8, **characterised in that** the non-circular connecting part is a nut (29) which is screwed onto a screw bolt (28) which is screwed into a threaded hole (27) in the shaft end, onto which a further nut (32) is screwed to secure the support plate (21).

10. Paddlewheel aerator according to claim 9, **characterised in that** the threaded holes (27), screw bolts (28) and nuts (29) on both shaft sockets (10) have opposite thread directions which are selected for tightening by the rotational resistance contrary to the rotational drive direction.

## Revendications

1. Ventilateur à roue à aubes flottant, pour l'aération des bassins à eaux usées et de clarification, avec un cadre (1) contenant des flotteurs (2, 3) allongés, et avec au moins un entraînement rotatif (9) porté par le cadre, muni d'un arbre de sortie de mouvement (10) et d'aubes (22) siégeant sur cet arbre, dont, lorsque l'aérateur est en état de fonctionnement, les flotteurs flottent sur la surface du bassin à eaux usées ou de clarification, l'arbre tourne au-dessus du niveau du bassin à eaux usées ou de clarification et des parties des aubes tournant conjointement arrivent jusqu'au dessous de ce niveau, **caractérisé en ce que** les flotteurs (2, 3) forment le cadre (1), sont disposés les uns par rapport aux autres en faisant un angle sensiblement droit, et sont reliés ensemble dans une configuration dans laquelle, sur un premier flotteur (2), sur ses deux côtés longitudinaux opposés l'un à l'autre, sont fixés d'autres flotteurs (3) ou tronçons de flotteurs, et **en ce que** ce premier flotteur (2), sur son côté supérieur, tourné à 90° vers le haut par rapport aux côtés longitudinaux auxquels les autres (tronçons de) flotteurs (3) sont montés, porte, en totalité ou en partie l'entraînement rotatif (9), dont l'arbre de sortie de mouvement (10) fait saillie des deux côtés et parallèlement à l'étendue longitudinale des autres (tronçons de) flotteurs (3) et qui est l'arbre portant les aubes (32).

2. Ventilateur à roue à aubes selon la revendication 1, **caractérisé en ce que** la configuration des flotteurs (2, 3) est une configuration en T.

3. Ventilateur à roue à aubes selon la revendication 1, **caractérisé en ce que** la configuration des flotteurs (2, 3) est une configuration en croix.

4. Ventilateur à roue à aubes selon la revendication 1, **caractérisé en ce que** la configuration des flotteurs (2, 3) est une configuration en H.

5. Ventilateur à roue à aubes selon l'une des revendications 1 à 4, **caractérisé en ce que** les flotteurs (2, 3) sont reliés ensemble de manière assemblée de façon désolidarisable.

6. Ventilateur à roue à aubes selon la revendication 5, **caractérisé en ce que** les flotteurs (2, 3) sont entre eux de construction identique.

7. Ventilateur à roue à aubes selon l'une des revendications 1 à 6, **caractérisé en ce que** l'entraînement rotatif (9) est disposé dans un carter d'ou l'arbre de sortie de mouvement (10) fait saillie des deux côtés, chaque fois sous forme de tubulure d'arbre (10) montée en palier flottant.

8. Ventilateur à roue à aubes selon la revendication 7, **caractérisé en ce que** les aubes (22) sont montées sur une plaque support (21) siégeant chaque fois sur l'une des extrémités d'arbre, les plaques support étant enfichées sur une partie d'accouplement (29) non ronde, siégeant sur une extrémité d'arbre et y étant assurées contre un déplacement dans la direction longitudinale de l'arbre (10).

9. Ventilateur à roue à aubes selon la revendication 8, **caractérisé en ce que** la partie d'accouplement (29) non ronde est un écrou (29), monté par vissage sur un boulon fileté (28) vissé dans un trou taraudé (27) ménagé dans l'extrémité d'arbre, boulon fileté (28) sur lequel, pour assurer la plaque support (21), un autre écrou (32) est encore monté par vissage.

10. Ventilateur à roue à aubes selon la revendication 9, **caractérisé en ce que** les trous taraudés (27), les boulons filetés (28) et les écrous (29) ont, sur les tubulures d'arbre (10) situés des deux côtés, une orientation de vis opposée, choisie chaque fois dans le sens d'un blocage par serrage au moyen de la résistance à la rotation opposée au sens de rotation d'entraînement.
